# EUROPEAN PATENT APPLICATION

(11) **EP 3 476 456 A1**
(43) Date of publication of application: **01.05.2019**
(21) Application number: 17820494.7
(22) Date of filing: 26.06.2017
(51) Int. Cl.: B01D 39/16, B01D 46/00

(54) **IMPROVED AIR PURIFICATION FILTER**

(30) Priority: 28.06.2016 KR 20160080692
(71) Applicant: Airtec Co., Ltd., Seongnam-si, Gyeonggi-do 13219 (KR)
(72) Inventor: SHIN, Young-Kyun, Seongnam-si Gyeonggi-do 13540 (KR)
(74) Representative: Thun, Clemens
(86) International application number: PCT/KR2017/006723
(87) International publication number: WO 2018/004218

(57) **Abstract**

Disclosed is an air purification filter: having a plurality of first protrusion parts arranged on a film part, which is made from a polymer synthetic resin, in the direction orthogonal to the flow direction of air, and a plurality of second protrusion parts arranged in the direction parallel to the flow direction of air, wherein the first and second protrusion parts are regularly formed; having a ventilation path formed by winding the film part; and formed such that the flow direction of the air is formed along the longitudinal direction of the film part, thereby reducing pressure loss and improving dust collection efficiency.

## Description

### Technical Field

The present disclosure relates to an improved air purification filter and, more particularly, to an air purification filter that reduces pressure loss and improves dust collection efficiency through regular arrangement.

### Background Art

In modern society, the excessive use of fossil fuels with the development of industrial society causes a lot of exhaust gas from vehicles, industrial facilities, and the like.

In addition, air pollution has become a serious social problem due to dust or the like generated by the expansion of urban infrastructure, and harmful substances emitted from various construction materials in the interior of new buildings cause residents to suffer from respiratory diseases and skin diseases.

Typical methods for collecting harmful substances, such as exhaust gas or dust, are roughly divided into a mechanical filtration method and an electrostatic filtration method. Since the mechanical filtration method uses a fiber filter, such as woven fabric, nonwoven fabric, or the like, it is impossible to capture fine dust (e.g., 10µm or less). In addition, accumulation of the dust causes a blockage of a mesh of the filter in the mechanical filtration method, thereby increasing pressure loss and shortening the lifespan thereof.

In addition, the electrostatic filtration method has good dust collection efficiency because it uses high-frequency electric discharge, but the electrostatic filtration method consumes electric power and has disadvantages in terms of maintenance and safety. Furthermore, a large amount of ozone generated in the electrostatic filtration method may cause side effects such as dyspnea, headache, and the like.

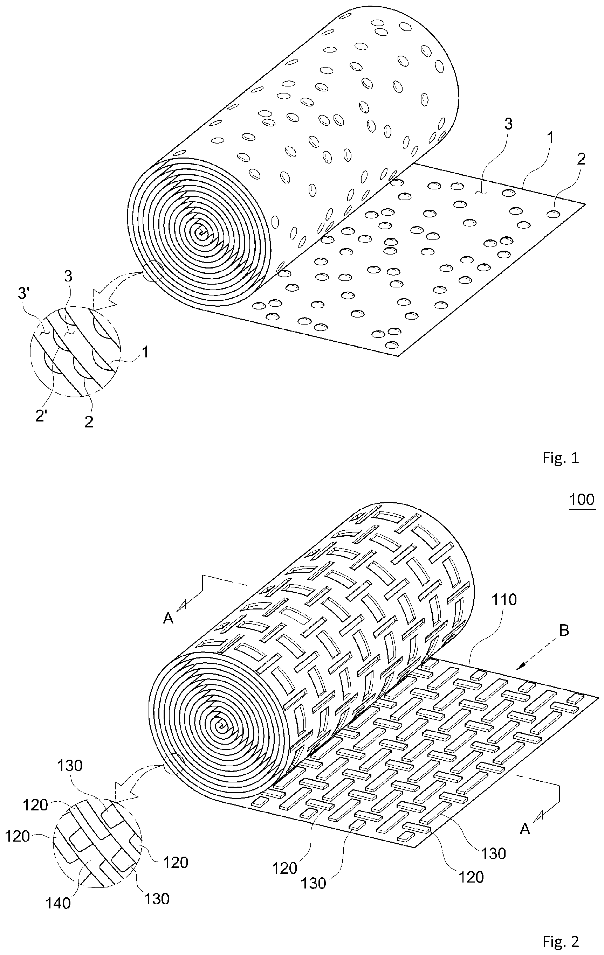

FIG. 1 is a perspective view illustrating an air purification filter according to the prior art. FIG. 1 shows an air purification filter manufactured by forming a plurality of protrusions 2 on a polymer synthetic resin film 1, such as polypropylene, polyethylene, or the like, while applying electric charge of 10 to 40kV thereto using an electric charging device, such as a corona discharging device, and by rolling the film 1 into a cylindrical shape so as to have ventilation paths 3 parallel with the flow direction of air.

However, since the air purification filter according to the prior art includes a plurality of protrusions 2 that are irregularly formed on the film 1, the ventilation paths 3 and 3' are formed irregularly, so that the fine dust is not captured by the protrusions 2 and passes therethrough or so that the flow of air is interrupted because the protrusions 2 and 2' are too close to each other, thereby causing pressure loss.

### Detailed Description of the Invention

### Technical Problem

The present disclosure has been made in view of the above-mentioned problems and provides an improved air purification filter capable of reducing pressure loss and improving dust collection efficiency through regular arrangement.

### Technical Solution

In order to solve the above problems, an improved air purification filter according to the present disclosure may include: a plurality of first protrusion parts regularly arranged on a film part made of a polymer synthetic resin in the direction orthogonal to the flow direction of air; and a plurality of second protrusion parts regularly arranged in the direction parallel to the flow direction of air, wherein ventilation paths are formed by rolling the film part such that the flow direction of air is formed along the longitudinal direction of the film part.

In addition, the film part according to the present disclosure has a charged layer formed on the surface thereof, which is charged with electric charges.

In addition, according to the present disclosure, the protrusion height (d1) of the first protrusion part is the same as or different from the protrusion height (d2) of the second protrusion part.

In addition, according to the present disclosure, the widthwise length (T1) of the first protrusion part is greater than the widthwise length (T2) of the second protrusion part.

In addition, according to the present disclosure, the first protrusion parts and the second protrusion parts protrude from one side of the film part.

In addition, according to the present disclosure, the first protrusion parts protrude from one side of the film part and the second protrusion parts protrude from the opposite side of the film part.

In addition, according to the present disclosure, the film part is made of a polymer synthetic resin mixed with at least one of silver, copper, or zinc oxide.

### Advantageous Effects

The present disclosure has effects of reducing pressure loss and improving dust collection efficiency through regular arrangement.

### Brief Description of the Drawings

FIG. 1 is a perspective view illustrating an air purification filter according to the prior art.
FIG. 2 is a perspective view illustrating an improved air purification filter according to the present disclosure.
FIG. 3 is a sectional view, taken along line A-A in FIG. 3, illustrating the structure of the improved air purification filter.
FIG. 4 is an exemplary view illustrating the operation of the improved air purification filter according to FIG. 3.
FIG. 5 is a perspective view illustrating another embodiment of an improved air purification filter according to the present disclosure.
FIG. 6 is a sectional view, taken along line A-A in FIG. 5, illustrating the structure of the improved air purification filter.
FIG. 7 is a sectional view illustrating another embodiment of an improved air purification filter according to the present disclosure.
FIG. 8 is a front view illustrating the state in which the improved air purification filters shown in FIG. 7 are stacked.
FIG. 9 is a front view illustrating another embodiment of an improved air purification filter according to the present disclosure.

### Mode for Carrying Out the Invention

Hereinafter, a preferred embodiment of an improved air purification filter according to the present disclosure will be described in detail with reference to the accompanying drawings.

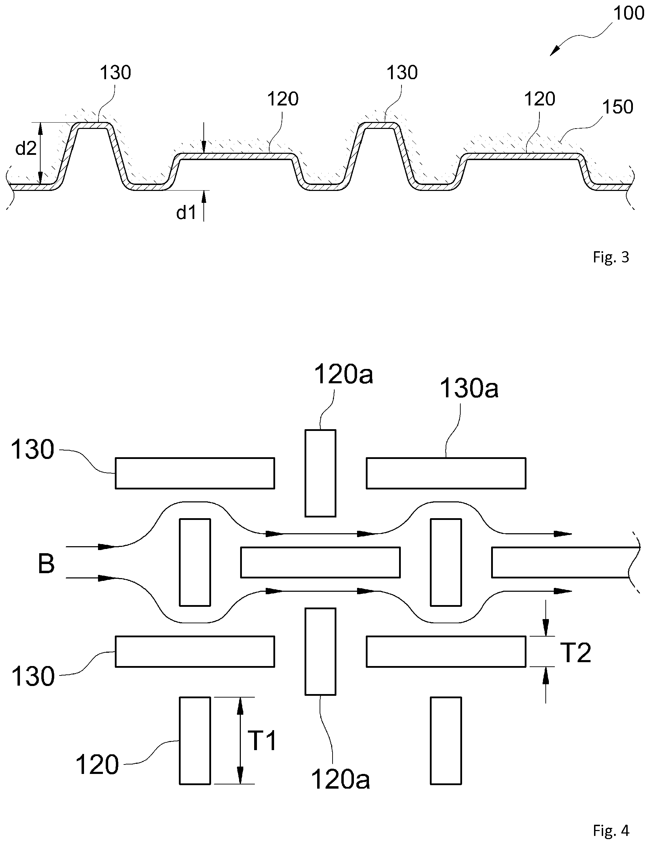

FIG. 2 is a perspective view illustrating an improved air purification filter according to the present disclosure. FIG. 3 is a sectional view, taken along line A-A in FIG. 3, illustrating the structure of the improved air purification filter. FIG. 4 is an exemplary view illustrating the operation of the improved air purification filter according to FIG. 3.

As shown in FIGs. 2 to 4, an improved air purification filter 100 according to the present disclosure includes: a plurality of first protrusion parts 120 regularly arranged on a film part 110, which is made of a polymer synthetic resin, in the direction orthogonal to the flow direction of air; and a plurality of second protrusion parts 130 regularly arranged in the direction parallel to the flow direction of air, wherein ventilation paths 140 are formed by rolling the film part 110 into a specific shape such that the flow direction of air is formed along the longitudinal direction of the film part 110.

The film part 110 is configured using a polymer synthetic resin, such as polypropylene, polyethylene, or the like, and the film part 110 is formed to have a thickness of, preferably, 0.1 to 1.0mm because the rigidity of the film part 110 may be lowered if the thickness of the film part 110 is less than 0.1mm.

In addition, the film part 110 may be configured by mixing at least one of silver nanoparticles, copper nanoparticles, or zinc oxide nanoparticles, which have antiseptic and antibacterial functions, therewith in order to prevent the collected bacteria from growing in the first and second protrusion parts 120 and 130, or may be configured by further mixing porous deodorant such as activated carbon, zeolite, or the like.

In addition, a charged layer 150, which is electrically charged, is formed on the surface of the film part 110, thereby further increasing the dust collection efficiency by static electricity.

That is, the surface of the film part 110 may be electrically charged using a corona discharge of 10kV to 40kV, thereby facilitating collection of dust and bacteria by static electricity. In this case, one side of the film part 110 has a positive (+) polarity and the opposite side of the film part 110 has a negative (-) polarity. Then, the film part 110 is rolled up such that the positive (+) polarity and the negative (-) polarity are stacked alternately, thereby generating strong static electricity.

In addition, after electrically charging the film part 110 through the generation of high voltage as described above, a non-conductive film layer (not shown) may be formed on the surface of the film part 110 so as to prevent the static electricity from being discharged.

The first protrusion parts 120 is configured to protrude from the film part 110 and includes a rectangular protrusion arranged in the direction orthogonal to the flow direction of air.

In addition, the first protrusion part 120 protrudes so as to have a height of, preferably, 0.5 to 3.0mm. If the protrusion height of the first protrusion part 120 is less than 0.5mm, the air purification filter 100 cannot perform an effective operation, and if the protrusion height of the first protrusion part 120 exceeds 3.0mm, the flow resistance of air passing through the filter 100 is increased.

Meanwhile, the protrusion height (d1) of the first protrusion part 120 may be the same as the protrusion height (d2) of the second protrusion part 130. Alternatively, the protrusion height (d1) of the first protrusion part 120 may be different from the protrusion height (d2) of the second protrusion part 130 so as to form ventilation paths 140 due to the difference between the protrusion heights of the first and second protrusion parts 120 and 130, thereby facilitating the flow of air.

The second protrusion part 130 is configured to protrude from the surface of the film part 110 so as to have a protrusion height of 0.5 to 3.0mm and so as to have a rectangular shape arranged in the direction parallel to the flow direction of air.

In addition, the second protrusion parts 130 are provided in front and back of the first protrusion part 120, and the widthwise length (T2) of the second protrusion part 130 is configured to be smaller than the widthwise length (T1) of the first protrusion part 120 such that the air passing through the ventilation paths 140 formed like a labyrinth more effectively collide with the first and second protrusion parts 120 and 130, thereby improving dust collection efficiency.

That is, the air makes a detour around the first protrusion part 120 to thus move in the longitudinal direction of the second protrusion part 130, and the air moving along the second protrusion part 130 collides with the first protrusion parts 120a disposed at either side of the second protrusion part 130, thereby further improving the dust collection efficiency.

In addition, the area of collision with the first and second protrusion parts 120 and 130 formed in a rectangular shape is further increased, so that the contact rate of dust or bacteria to be removed can be significantly increased.

The ventilation paths 140 are formed like a labyrinth through regular arrangement of the first protrusion parts 120 and the second protrusion parts 130 so as to increase the frequency of collision of the air to be purified, thereby facilitating dust collection.

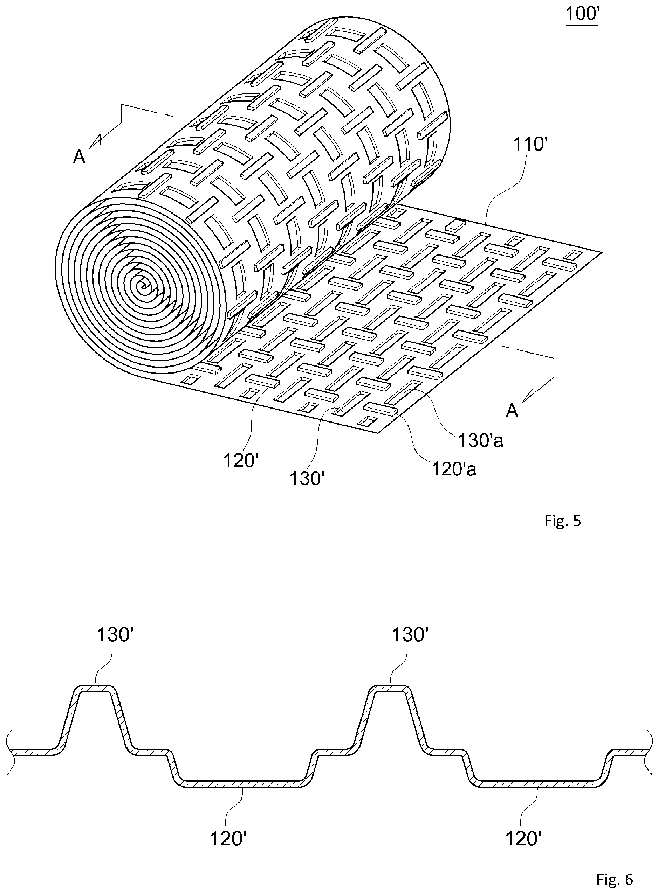

Although the first and second protrusion parts 120 and 130 are configured to be provided on one side of the film part 110 in the present embodiment, first protrusion parts 120' and 120'a and second protrusion parts 130' and 130'a may be configured to protrude from both sides of the film part 110' as shown in FIGs. 5 and 6.

That is, the first protrusion parts 120' and 120'a may be configured to protrude from one side of the film part 110', and the second protrusion parts 130' and 130'a may be configured to protrude from the opposite side of the film part 110'. Then, the air purification filter 100' may be configured by rolling up the film part 110'.

Although the air purification filter is configured by rolling the film part into a cylindrical shape in the above-described embodiment, but the air purification filter is not limited thereto and may be configured by modifications in various shapes.

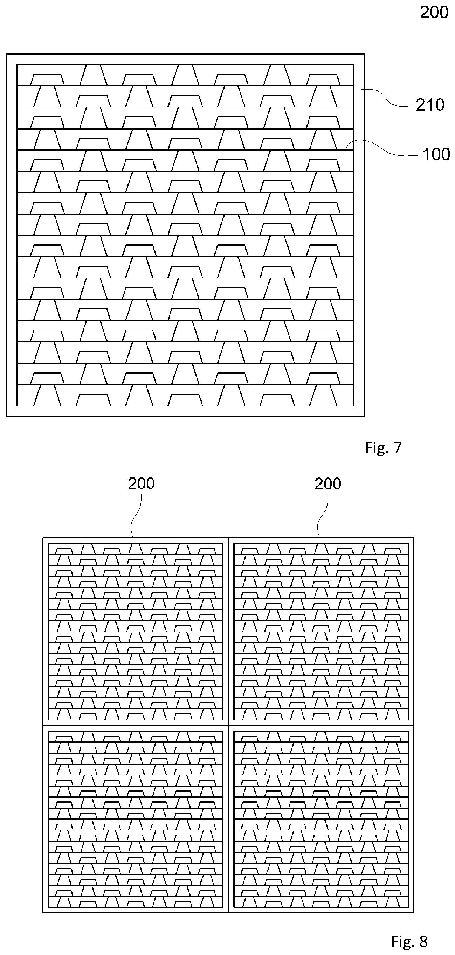

FIGs. 7 and 8 are views illustrating another embodiment of an improved air purification filter according to the present disclosure in which a filter assembly 200 may be configured by stacking, into a rectangular frame 210, the air purification filters 100 cut to pieces of a specific size.

In addition, the filter assemblies 200 may be stacked on or connected to each other, thereby configuring filters of various sizes.

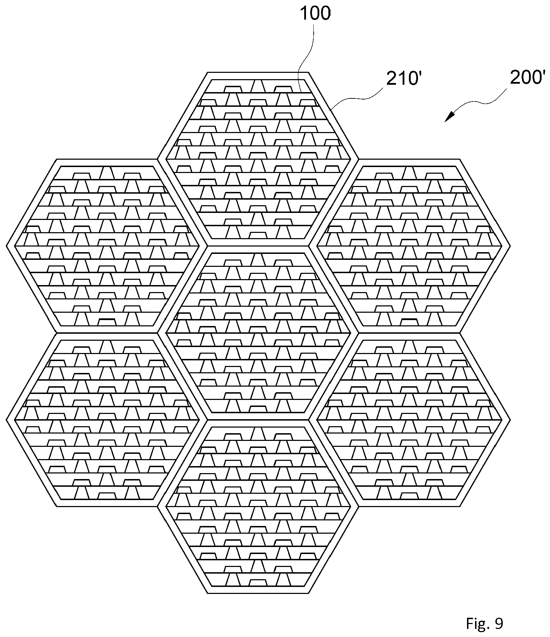

In addition, FIG. 9 is a view illustrating another embodiment of an improved air purification filter according to the present disclosure in which a filter assembly 200' may be configured by stacking, into a hexagonal frame 210', the air purification filters 100 cut to pieces of a specific size and the filter assemblies may be stacked on each other depending on installation space, thereby providing filters of various sizes.

Therefore, it is possible to provide an air purification filter capable of reducing the pressure loss and improving the dust collection efficiency through the regular arrangement.

While the present disclosure has been described with reference to preferable embodiments, it is to be understood that the present disclosure may be modified and changed in various forms by those skilled in the art without departing from the scope and spirit of the present disclosure as defined in the appended claims.

In addition, the thicknesses of the lines or the sizes of the elements illustrated in the drawings of the embodiments may be exaggerated for clarity and convenience of explanation. The terms used above have been defined in consideration of the functions thereof in the present disclosure, but may be varied according to the intention or practices of a user or operator, so that the interpretation of the terms must be made on the basis of the entire content of this specification.

### Description of Numerals

100, 100a, 100b, 100': air purification filter
110, 110': film part
120, 120': first protrusion part
120a: first protrusion part
130, 130': second protrusion part
130a: second protrusion part
140: ventilation path
150: charged layer
200, 200': filter assembly
210, 210': frame

## Claims

1. An improved air purification filter comprising:
a plurality of first protrusion parts (120 and 120') regularly arranged on a film part (110 or 110') made of a polymer synthetic resin in the direction orthogonal to the flow direction of air; and
a plurality of second protrusion parts (130 and 130') regularly arranged in the direction parallel to the flow direction of air,
wherein ventilation paths (140) are formed by rolling the film part (110 or 110') such that the flow direction of air is formed along the longitudinal direction of the film part (110 or 110').

2. The improved air purification filter of claim 1, wherein the film part (110 or 110') has a charged layer (150) formed on the surface thereof, which is electrically charged.

3. The improved air purification filter of claim 2, wherein the protrusion height (d1) of the first protrusion part (120 or 120') is the same as or different from the protrusion height (d2) of the second protrusion part (130 or 130').

4. The improved air purification filter of claim 3, wherein the widthwise length (T1) of the first protrusion part (120 or 120') is greater than the widthwise length (T2) of the second protrusion part (130 or 130').

5. The improved air purification filter of claim 4, wherein the first protrusion parts (120) and the second protrusion parts (130) protrude from one side of the film part (110).

6. The improved air purification filter of claim 4, wherein the first protrusion parts (120') protrude from one side of the film part (110') and the second protrusion parts (130') protrude from the opposite side of the film part (110').

7. The improved air purification filter of claim 4, wherein the film part (110 or 110') is made of a polymer synthetic resin mixed with at least one of silver, copper, or zinc oxide.
